# EUROPEAN PATENT SPECIFICATION

(11) **EP 1 441 583 B1**
(45) Date of publication and mention of the grant of the patent: **15.06.2005**
(21) Application number: 02770327.1
(22) Date of filing: 05.11.2002
(51) Int. Cl.: A01K 11/00, A01K 1/00

(54) **SYSTEM FOR CHECKING THE PRESENCE OF AN IDENTIFICATION LABEL WITH ANIMALS**
ANLAGE FÜR DIE KONTROLLE DER ANWESENHEIT EINES IDENTIFIKATIONSLABELS BEI TIEREN
SYSTEME PERMETTANT DE VERIFIER LA PRESENCE D'UNE MARQUE D'IDENTIFICATION CHEZ DES ANIMAUX

(30) Priority: 05.11.2001 NL 1019296
(43) Date of publication of application: 04.08.2004
(73) Proprietor: N.V. Nederlandsche Apparatenfabriek NEDAP, 7141 DC Groenlo (NL)
(72) Inventor: VAN BRANDENBURG, Wilhelmus Arnoldus Bernardus M., NL-6921 TH Duiven (NL)
(74) Representative: Winckels, Johannes Hubertus F.
(86) International application number: PCT/NL2002/000703
(87) International publication number: WO 2003/039247

(56) References cited:
- EP-A- 0 499 428
- EP-A- 0 898 883
- US-A- 5 790 047

## Description

The invention relates to a system for individually checking animals which each can be provided with an identification label, the system being provided with at least one read-out device for generating an electromagnetic interrogation field and recording a response signal comprising an identification code of an identification label present in the field, the system being further provided with detection means for detecting a presence of an animal.

Such a system is known per se and finds application there, where for instance the behavior of each individual animal in a large group of animals kept as a herd has to be recorded from time to time. Also in cases where the origin of each animal needs to be traceable, this system can be used. In particular on farms, where animals are kept in groups of large numbers, such a system brings relief. In such a system, the identification label comprises a transponder which, in an interrogation field, can transmit the response signal comprising an identification code. Such an identification label can be provided in an ear of an animal, as is the case with pigs. However, it is also possible that an identification label is incorporated into the animal, as is, for instance, the case with cows where in one of the stomachs a bolus provided with a transponder forms a readable identification label. The system also comprises detection means for detecting the presence of an animal. For instance a push handle, which is pushed down by the nose of an animal to thereupon release an amount of food or water, can also be understood to be a detection means. As soon as the detection means detects the presence of an animal, the read-out device can generate an electromagnetic interrogation field for identification of the animal and collection of data about how often the identified animal goes to the feeding-trough to take fodder or water. Document EP-A-898883 discloses a system whereby a correction method is proposed for providing accurate cow identification even when there is a (undetected and unidentified) cow present with a missing identification tag.

A disadvantage of such a system is that an animal cannot be identified when the identification label is missing or defective. When no response signal is received by the read-out device on the basis of which the identification code can be derived, it is not possible, if one should wish so, to couple the collected data to that animal.

The object of the invention is to provide a system which meets this problem.

This object is achieved with the system according to claim 1, which is characterized in that the detection means are arranged to detect the presence of an animal in the interrogation field, the system being further provided with distinguishing means designed for distinguishing an animal of which it has been detected, with the aid of the detection means, that the animal is present in the interrogation field and from which animal no response signal is received by the read-out device on the basis of which the identification code can be derived.

This offers the advantage that an unidentifiable animal can be recognized as such, so that this animal can, for instance, still be provided with an identification label or can be identified in a completely different manner. With the aid of biometric information of each animal, for instance, an unidentified animal can still be identified, so that earlier collected data will not be lost.

A special embodiment of a system according to the invention is characterized in that the distinguishing means comprise spraying means with which an animal, for distinction of the animal, can be provided with a colored spray. This offers the advantage that, for some time, the system can automatically render an unidentified animal recognizable as such in the group also, so that the farm staff need not be present at the moment the read-out device generates an interrogation field. At a much later time than the time it was established that the animal was unidentifiable, the respective animal can still be provided with an identification label or still be identified with the aid of, for instance, biometric information.

A more special embodiment of the system according to the invention is characterized in that the distinguishing means comprise a controllable fence with which the animal, for distinction of the animal, can be guided to a distinction space. This offers the advantage that in the course of time, the farm staff only needs to look into the distinction space to ascertain whether there are unidentifiable animals in the group. Moreover, the farm staff needs no longer isolate these animals from the group or approach them in the group to provide the unidentifiable animals with an identification label or to discover the identity of the animals in a different manner.

A highly advantageous embodiment of a system according to the invention is characterized in that the detection means are provided with a fence which is designed to be self-closing and which can be opened by an animal. In this case, the opening of the fence by an animal comprises a detection of the presence of the animal. An advantage is that such detection means can be of very inexpensive design. Means for detecting the opening of the fence can be of very simple and very inexpensive design. In many cases, such a fence is present anyway. Moreover, in many cases, such a fence can be opened by the head of the animal so that the position and the orientation of the animal can be assumed to be known. This offers the advantage that the interrogation field can, for instance, be generated such that the identification label with which the animal is normally provided, should come within the interrogation field when the animal opens the fence. Thus, in a reliable manner, it can be determined that the animal is present in the interrogation field and whether, normally, a response signal should have been received by the read-out device on the basis of which the identification code can be derived. An additional advantage is that in this embodiment, the position and/or orientation of the animal can also be assumed to be known for the purpose of the distinguishing means. When using, for instance, a spray, this can be limited to a desired part of the animal. This saves on spraying agent. Observing a marking provided in such a manner on an animal is simplified because it is known where the marking should be provided. This embodiment is also reliable in a different respect. The fact is that the fence can be designed such that it is closed unless an animal pushes the fence open. In other words, in the absence of an animal, a "false detection" is virtually precluded.

With this embodiment, it preferably holds that the system is provided with a mechanical and/or electronic sensor with which the opening of the fence can be detected. Such sensors can be of very inexpensive and very reliable design.

The system according to the invention is now elucidated with reference to a drawing. In the drawing:
Fig. 1 schematically shows a first embodiment of a system according to the invention;
Fig. 2 schematically shows a second embodiment of a system according to the invention;
Fig. 3 schematically shows a third embodiment of a system according to the invention; and
Fig. 4 schematically shows a fourth embodiment of a system according to the invention.

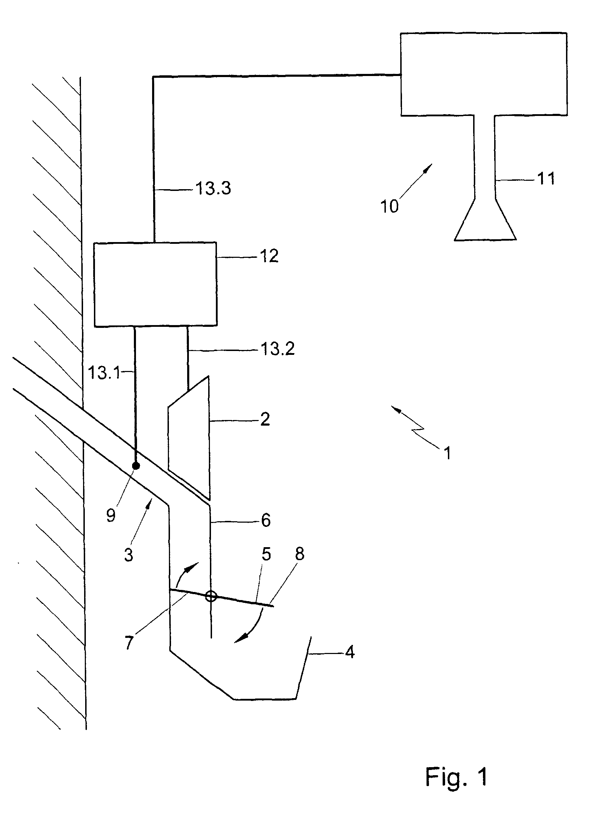

In Fig. 1, a system (1) is shown for individually checking animals which can each be provided with an identification label. To that end, the system (1) is provided with a read-out device (2), which, in this case, could comprise a walk-along antenna. In use, the read-out device (2) generates an electromagnetic interrogation field and the read-out device (2) records a response signal comprising an identification code of an identification label located in the interrogation field and with which an animal can be provided.

The system (1) is further provided with detection means (3) for detecting the presence of an animal. In this case, the detection means (3) are designed as a drinking-water bowl (4) which is provided with water when an animal pushes the push handle down with the nose. When the part (8) of the push handle (5) located outside the water supply pipe (6) is pushed down by the animal, a part (7) of the push handle (5) located within the water supply pipe (6) moves upwards. As a result, water flows into the drinking-water bowl. In this case, a pressure meter or flow meter (9) included in the water supply pipe (6) detects the presence of an animal at the drinking water bowl (4) in an indirect manner. When an animal does not use the drinking water bowl (4), the part (7) of the push handle (5) located within the water supply pipe (6) will be pushed down by the pressure of the water, thereby closing off the water supply. Then, the pressure or flow measured by the pressure meter or flow meter (9) will be interpreted as an absence of an animal using the drinking water bowl (4).

The identity of an animal using the drinking water bowl (4) can be determined by the read-out device (2) in that the read-out device (2) generates an electromagnetic field and records the response signal, comprising an identification code of an identification label with which an animal has been provided. The read-out device 2 will be set such, that the interrogation field is generated over dimensions within which the identification label will be present when an animal is present at the drinking water bowl (4). On the other hand, the dimensions of the interrogation field are such that a label from an animal other than the animal detected by the detection means cannot be detected. In other words, it holds that the dimensions of the interrogation field are such that only the identification code of a label of an animal detected by the detection means (3) can be detected by the read-out unit.

The system is further provided with distinguishing means 10 which, in this case, comprise a spraying device 11. The system 1 is further designed to provide the animal, when an animal is present at the drinking water bowl 4, with the aid of distinguishing means 10, in this case the spraying device 11, with a colored spray when no response signal is received by the read-out device 2 on the basis of which the identification code can be derived. In other words, when the animal is unidentifiable, the animal is provided with a colored spray. The distinguishing means 10 are then arranged such, that only the respective animal of which the identification code cannot be (properly) determined is distinguished by, in this case, spraying it. To operate this process, in this example, the system 1 is provided with a control unit 12 to which the detection means 3, the read-out device 2 and the distinguishing means 10 are connected via lines 13.3, 13.2 and 13.3, respectively. The control unit operates as follows. If the control unit 12 detects, via line 13.1 and line 13.2, that an animal is detected by the detection means 3 and that also, an identification code is detected via the read-out device 2, the control unit 3 will not activate the distinguishing means 10. If the control unit 2, via the line 13.1, detects that the detection means 3 records an animal and, via line 13.2, detects that the read-out device 2 does not receive a response signal on the basis of which the identification code can be derived, the control unit 12 will activate the distinguishing means 10 via line 13.3, so that the animal, detected by the detection means 3, is provided with a spray. The identification label of an animal provided with a spray can (later) be checked. The colored spray can be of a nature such that it is permanently visible on the animal until the farm staff deliberately washes it off. The spray can also be such that after, for instance, some days it disappears automatically so that the farm staff must have seen the animals in the group within a few days to determine whether there are sprayed animals in the group. With this embodiment, the frequency with which the animals are checked whether they are provided with an operational identification label will be the same as the frequency with which the animals drink the water from the drinking water bowl 4. However, the staff need not check the group with the same frequency.

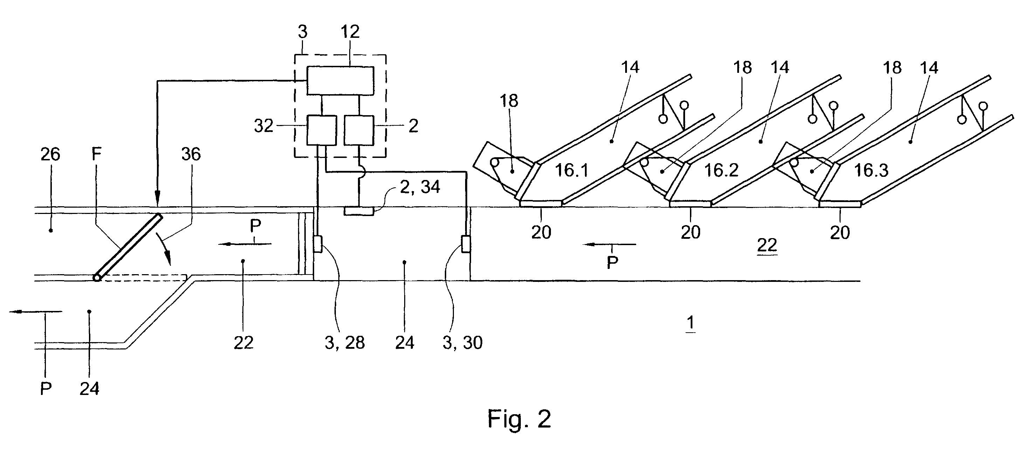

In Fig. 2, a second embodiment of the system according to the invention is shown. Here, the system is further provided with a lock to which an animal can be led via a dosing system 14 built up with the aid of fences.

The dosing system 14 comprises spaces 16.1, 16.2 and 16.3 each of which can be occupied by an animal such as a cow. The spaces can, for instance, each be provided with a self-feeder 18 for feeding the animals. Each space 16.1,16.2, 16.3 is provided with a controllable fence 20. When a controllable fence 20 is opened, it gives access to a pathway 22 through which an animal can move in the direction of the arrow P. In the pathway 22, a lock 24 is included through which the animal can move. In fact, the lock 24 is a part of the pathway 22 and has dimensions such that two or more animals cannot stand next to each other. Downstream of the lock 24, the pathway 22 divides into a first pathway 24 and a second pathway 26. The first pathway 24 gives access to, for instance, the stable. The second pathway 26 gives access to, for instance, a distinction space for inspection of the animals.

In this example, the detection means 3 are provided with sensors 28, 30, each of which are connected to a control unit 32 of the detection unit 3. The sensors 28, 30 can, for instance, be designed as light sensors which can detect a shadow caused by an animal in the lock 24, or can detect that a beam of light in the lock is interrupted by an animal. Other embodiments of the sensors are also conceivable. For instance, the sensors 28, 30 can also be designed to detect the presence of an animal in the lock 24 with the aid of ultrasonic sound. The control device 32 is a device known per se, cooperating in a manner known per se with the sensors for carrying out the above-mentioned detections.

In this example, the read-out unit 2 is provided with a walk-along antenna 34 which is mounted near a side wall of the lock 24.

In this example, the distinguishing means 10 are provided with a controllable fence 36 which can assume two positions. In a first position of the fence, as shown in Fig. 2, the fence provides passage from the pathway 22 to the pathway 24. In a second position of the fence, indicated in interrupted lines in Fig. 2, the fence provides passage from the pathway 22 to the pathway 26.

Further, it is noted that the interrogation field generated by the walk-along antenna 34 has dimensions such that only a label of an animal can be detected which is present in the lock and which is detected by the detection means 3. The operation of the system is as follows. Suppose an animal present in the space 16.2 has finished feeding. Then, the fence 20 of the respective space is opened. The animal then proceeds to the pathway 22 and will start to move in the direction of the arrow P to go to the stable. Thus, the animal passes the lock 24. With the aid of the sensors 28, 30, the detection means detect the presence of the animal in the lock 24. This means that the detection means detect the presence of the animal in the interrogation field which is generated with the aid of the walk-along antenna 34. When the read-out unit 2, with the aid of the walk-along antenna 34, receives an identification code from a label worn by an animal, the fence remains in the position as shown in Fig. 2. The animal will then proceed via the pathways 22 and 24 to the stable space. However, when the situation is such that read-out unit 2 does not detect an identification code, the control unit 12 will control the fence such that it assumes the position indicated in interrupted lines in Fig. 2. The animal will then move from the lock 24 and the pathway 22 to the pathway 26 where the animal ends up in the above-mentioned distinction space to be checked. In this space, the label of the animal can be checked or it can be checked whether or not the animal wears a label in the first place.

It is also possible that the read-out unit 2 determines that an invalid identification code is read-out. The fact is that the labels known per se worn by the animals can be designed such that an identification code has to meet a predetermined format. When the identification code is deformed, damaged or otherwise invalid, this is detected by the read-out unit 2. In that case, the read-out unit 2 will pass on to the control unit 12 that no valid identification code is detected or pass nothing on at all to the control unit 12. In that case, the control unit 12 knows that no, or an invalid identification code is received. Also in the case of an invalid identification code, the control unit 12 will position the fence in the position indicated in interrupted lines in Fig. 2, so that the unidentifiable animal, when leaving the lock 24, will move via the pathway 26 to the above-mentioned distinction space.

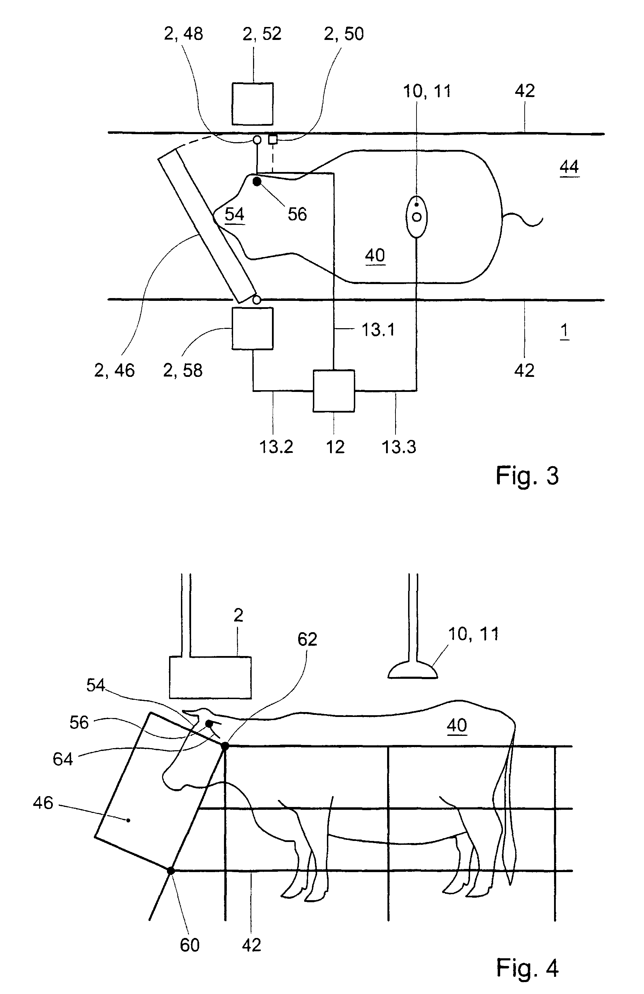

In Fig. 3, schematically, a top plan view of a third embodiment of the system 1 and possible uses of the system according to the invention are represented. Parts corresponding to Figs. 1 and 2 are provided here with the same reference numerals. An animal 46 is shown in a path 44 bounded by an enclosure 42. In the path 44, a fence 46 as at least a part of the detection means 2 is included. The fence 46 can be pushed open by the animal. The opening of the fence 46 is detectable and as such, the presence of the animal at the location of the fence is detectable. The fence can be provided with, for instance, a pressure switch 48 arranged as a sensor to detect the opening of the fence 46. However, it is also conceivable that when the fence is opened, a circuit between the fence 46 and, for instance, a closing post 50 is interrupted and that consequently, the opening of the fence 46 is detected. The detection of the opening of the fence 46 can be effected by a skilled person in many ways. The arrangement of mechanical and/or electronic sensors on and/or near the gate comprises inexpensive and simple provisions.

For generating an interrogation field, a transmitting device 52 of the read-out unit 2 is placed, for instance, near the fence 46. When the head 54 of the animal 40 is provided with an identification label 56 in a normal manner, when the fence 46 is opened by the head 54 of the animal 40, the identification label will be present in the interrogation field. Near the fence 46, also a receiving device 58 of the read-out unit is placed. The receiving unit 58 is designed for deriving an identification code on the basis of a response signal produced by the identification label when the identification label 56 is in the interrogation field.

The distinguishing means 10 which are designed to distinguish an animal of which, with the aid of the detection means 3, it is detected that the animal is present in the interrogation field and of which no response signal is received which can be converted by the read-out device 2 into an identification code, comprise, in this example, the spraying device 11. Preferably, this spraying device is arranged such that at a position and/or orientation of an unidentifiable animal 40 pushing open the fence 46, only a desired part of the animal is provided with the spraying agent. For instance, in this example, the spraying means are arranged such that the back and a part of each flank of the animal is provided with spraying agent. The fence 46 is further provided with a door-closer or a spring which provides that the fence closes again when the animal has possibly left the surroundings, i.e. the animal has, for instance, passed the fence. The fence can also be designed to be self-closing in a different manner.

In Fig. 4, a fourth embodiment of an application of the system is shown in which parts corresponding to the previous Figures are provided with the same reference numerals.

In Fig. 4, schematically, a side view is shown of an animal 40 which pushes open the fence 46 with the head 54. The fence 46 is of such design that it falls shut of itself when no animal is present for pushing open the fence. In this example, the fence 46 is arranged at an inclination. The hinges 60, 62 are not located one above the other but in this example are located in the same vertical plane. When the inclined fence 46 is not held open, it will fall shut as a matter of course under the influence of gravity. In Fig. 4, the detection means 3 as well as the control unit 12 have been omitted for simplicity's sake. The detection means 3 can, for instance, be designed to detect that the fence 46 is opened as discussed hereinabove. In this example, the read-out device 2 is placed at a position which is located very near a position where, normally, the identification label 56 is provided when the animal pushes open the fence 46 with the head 54. In this example, this last position involves one of the ears 64 of the animal 40. In view of the mutual vicinity of read-out device 2 and the position of the identification label when the animal pushes against the fence with its head, both the interrogation field and the response signal can be relatively weak and yet be observed by the respective receiving device. This entails that the energy consumption can be low, which can be advantageous, especially when using a battery connected to the identification label.

It is evident that the fence 46 can be placed anywhere. It is not necessary, although it is desirable in many cases, that the fence 46 be placed in a predetermined path to be traveled by the animal. The fence could, for instance, also be placed near a feeding trough. The access to the feeding trough could then exclusively take place by opening the fence. In this context, opening the fence is also understood to mean opening the fence further. In other words, the fence need not be started from a completely closed position to make detection of the presence of an animal possible.

Naturally, it is possible to use the direction of movement of the fence in the detection of the presence of an animal. In this context, fence can also be understood to mean a hatch hanging downwards when an animal is absent and which can be pushed away by an animal from the downward hanging position. Thus, many embodiments of a fence forming part of the detection means 3 are conceivable.

Use of the system according to the invention is not limited to use on a farm. For instance, such a system wherein, for instance, use is made of a lock 24 can also be utilized in an abattoir. This can, in particular, be of interest for tracing meat. The fact is that nowadays, it is not only necessary that meat can be traced back to the farm the animal comes from. It is also necessary that it can be established from which individual animal the meat comes. In such a situation, it is of great interest that all animals can be identified and that unidentifiable animals can be recognized as such to still be identified.

The invention is not limited in any manner to the exemplary embodiments shown. For instance, the read-out device 2 can comprise a transmitting and receiving device designed as a gate. Pivotable fences which are arranged at an entrance and an exit of a lock 24 and can only pivot in one direction, can also serve as detection means 3. Also, the fence of the detection means 3 can consist of a beam or barrier rotatable around a vertical axis. It is also possible that the detection means 3 are provided with a camera for detecting the presence of an animal in the interrogation field. It is also possible that the detection means are provided with scales on which the animal stands when the animal is present in the interrogation field. The fact that with the aid of the scales, the animal is weighed, implies that the animal is also present in the interrogation field. The scales have, for instance, dimensions such that each time only one animals can stand thereon. Also in that case, the interrogation field has dimensions such that only identification labels of the animal standing on the scales can be read out.

The labels used can both the passive and active labels. The read-out device can be provided with a combined transmitting and receiving antenna or separate transmitting and receiving antennas. Also, the read-out device can be provided with a separate transmitter and a separate receiver or a single transceiver. When the labels comprise a resonant circuit, the read-out device can be designed for detecting labels both via the absorption principle and according to the transmission principle. What is achieved in the above-described examples, with the lock 24 as well as with the drinking water bowl I 4, is that each time, the presence of one animal in the interrogation field is detected by the detection means 3, while the interrogation field has dimensions such that only the label of the respective animal can be read out. Naturally, in addition to the use of the lock and the drinking water bowl, also other features are conceivable to achieve this. Such variants are all understood to fall within the framework of the invention. The detection means can be provided at a distance from the read-out device 2 and the detection means 3. It holds in particular, then, that only that animal can be distinguished of which it has been established that no identification code can be determined. Also, a plurality of detection means 3 can be present to determine with more certainty that an animal is present in the interrogation field. Combinations of detecting means are possible too. For instance, the animals can be guided to a distinction space and, moreover, be sprayed. The distinguishing means, for that matter, are not limited to marking or isolating an unidentified animal. It is also conceivable that distinguishing means are designed to record a biometric property of the animal such as a foot print, an iris scan, a photograph, etc., so that an identification characteristic of the unidentified animal is immediately obtained. In such a case, it is possible to couple the data obtained from an animal back to the proper animal. The distinguishing means can also comprise a photo camera which makes a photograph of an identification characteristic of an animal which cannot be identified with the aid of the read-out device. Such an identification characteristic can, for instance, comprise a number, provided on the skin. Naturally, in many cases it is possible in a simple manner to combine parts of one of the embodiments described with parts of other embodiments shown. Such variants are all understood to belong to the invention as defined in the appended claims.

## Claims

1. A system (1) for individually checking animals which each can be provided with an identification label, the system being provided with at least one read-out device (2) for generating an electromagnetic interrogation field and recording a response signal comprising an identification code of an identification label present in the field, the system being further provided with detection means (3) for detecting a presence of an animal, **characterized in that** the detection means (3) are designed to detect the presence of an animal in the interrogation field, and the system being further provided with distinguishing means (10) designed for distinguishing an animal of which, with the aid of the detection means, it has been detected that the animal is present in the interrogation field and from which no response signal is received by the read-out device (2) on the basis of which the identification code can be derived.

2. A system according to claim 1, **characterized in that** the distinguishing means comprise spraying means (11) with which an animal, for distinguishing the animal, can be provided with a colored spray.

3. A system according to claim 1 and/or 2, **characterized in that** the distinguishing means comprise a controllable fence (36) with which an animal, for distinguishing the animal, can be guided to a distinction space.

4. A system according to any one of the preceding claims, **characterized in that** the detection means (3) comprise a camera for detecting the presence of an animal.

5. A system according to any one of the preceding claims, **characterized in that** the detection means comprise light sensors (28, 30) for detecting the presence of an animal.

6. A system according to any one of the preceding claims, **characterized in that** the detection means (3) are designed to detect the presence of an animal with the aid of ultrasonic sound.

7. A system according to any one of the preceding claims, **characterized in that** the detection means (3) comprise a weighing device for weighing an animal.

8. A system according to any one of the preceding claims, **characterized in that** the detection means are provided with a fence (46), which can be designed to be self-closing, and can be opened by an animal.

9. A system according to claim 8, **characterized in that** the detection means (3) are provided with a mechanism and/or an electronic sensor with which the opening of the fence (46) is detectable.

10. A system according to any one of the preceding claims, **characterized in that** the detection means further comprise an animal-operable feeding trough (4, 18) which is designed for detecting the presence of an animal.

11. A system according to any one of the preceding claims, **characterized in that** the read-out device comprises a walk-along antenna (34) for generating the interrogation field.

12. A system according to any one of claims 1-11, **characterized in that** the read-out device comprises a transmitting and receiving device (52, 58) designed as a gate for generating the interrogation field.

13. A system according to any one of the preceding claims, **characterized in that** the system comprises a lock (24) in which each time one animal can be received while the detection means are designed for detecting the presence of the animal in the lock and wherein the read-out device is designed for only detecting a label of the animal present in the lock.

14. A system according to any one of the preceding claims, **characterized in that** the dimensions of the interrogation field are such that only the identification code of a label of an animal which is detected by the detection means can be detected by the read-out device (2).

15. A system according to any one of the preceding claims, **characterized in that** the distinguishing means (10) are designed such that each time only that animal can be distinguished of which it has been established that no identification code can be determined.

## Patentansprüche

1. System (1) zum individuellen Überprüfen von Tieren, die jeweils mit einem Identifikations-Label versehen sein können, wobei das System mindestens eine Auslesevorrichtung (2) zum Erzeugen eines elektromagnetischen Abfragefelds und zum Aufzeichnen eines Antwortsignals, welches einen Identifikations-Code eines in dem Feld vorhandenen Identifikations-Labels enthält, aufweist, und das System ferner Detektionseinrichtungen (3) zum Detektieren der Anwesenheit eines Tieres aufweist,
**dadurch gekennzeichnet, dass**
die Detektionseinrichtungen (3) zum Detektieren der Anwesenheit eines Tieres in dem Abfragefeld vorgesehen sind und das System ferner Unterscheidungseinrichtungen (10) zum Unterscheiden eines Tieres aufweist, bei dem mit Hilfe der Detektionseinrichtungen festgestellt worden ist, dass es sich in dem Abfragefeld befindet, und von dem die Auslesevorrichtung (2) kein Antwortsignal empfängt, von dem der Identifikations-Code abgeleitet werden kann.

2. System nach Anspruch 1, **dadurch gekennzeichnet, dass** die Unterscheidungseinrichtungen Sprüheinrichtungen (11) aufweisen, mit denen ein Tier zu Unterscheidungszwecken mit einem Farbspray besprüht werden kann.

3. System nach Anspruch 1 und/oder 2, **dadurch gekennzeichnet, dass** die Unterscheidungseinrichtungen ein steuerbares Gatter (36) aufweisen, durch das ein Tier zu Unterscheidungszwecken zu einem Differenzier-Platz geführt werden kann.

4. System nach einem der vorhergehenden Ansprüche, **dadurch gekennzeichnet, dass** die Detektionseinrichtungen (3) eine Kamera zum Detektieren der Anwesenheit eines Tieres aufweisen.

5. System nach einen der vorhergehenden Ansprüche, **dadurch gekennzeichnet, dass** die Detektionseinrichtungen Lichtsensoren (28,30) zum Detektieren der Anwesenheit eines Tieres aufweisen.

6. System nach einem der vorhergehenden Ansprüche, **dadurch gekennzeichnet, dass** die Detektionseinrichtungen (3) zum Detektieren der Anwesenheit eines Tieres mit Hilfe von Ultraschall vorgesehen sind.

7. System nach einem der vorhergehenden Ansprüche, **dadurch gekennzeichnet, dass** die Detektionseinrichtungen (3) eine Wiegevorrichtung zum Wiegen eines Tieres aufweisen.

8. System nach einem der vorhergehenden Ansprüche, **dadurch gekennzeichnet, dass** die Detektionseinrichtungen ein Gatter (46) aufweisen, das selbstschließend ausgeführt sein kann und von einem Tier geöffnet werden kann.

9. System nach Anspruch 8, **dadurch gekennzeichnet, dass** die Detektionseinrichtungen (3) einen Mechanismus und/oder einen elektronischen Sensor aufweisen, mit dem das Öffnen des Gatters (46) detektierbar ist.

10. System nach einem der vorhergehenden Ansprüche, **dadurch gekennzeichnet, dass** die Detektionseinrichtungen ferner einen von einem Tier benutzbaren Futtertrog (4,18) aufweisen, der zum Detektieren der Anwesenheit eines Tieres vorgesehen ist.

11. System nach einem der vorhergehenden Ansprüche, **dadurch gekennzeichnet, dass** die Ausfesevorrichtung eine Walk-along-Antenne (34) zum Erzeugen des Abfragefelds aufweist.

12. System nach einem der Ansprüche 1-11, **dadurch gekennzeichnet, dass** die Auslesevorrichtung eine Sende-/Empfangsvorrichtung (52,58) aufweist, die als Gate zum Erzeugen des Abfragefelds ausgeführt ist.

13. System nach einem der vorhergehenden Ansprüche, **dadurch gekennzeichnet, dass** das System eine Schleuse (24) aufweist, in der immer ein Tier auf einmal aufgenommen werden kann, während die Detektionseinrichtungen zum Detektieren der Anwesenheit des Tieres in der Schleuse vorgesehen sind und wobei die Auslesevorrichtung ausschließlich zum Detektieren eines Labels des in der Schleuse anwesenden Tieres vorgesehen ist.

14. System nach einem der vorhergehenden Ansprüche, **dadurch gekennzeichnet, dass** das Abfragefeld derart dimensioniert ist, dass nur der Identifikations-Code eines Labels eines Tieres, das von den Detektionseinrichtungen detektiert worden ist, von der Auslesevorrichtung (2) detektiert werden kann.

15. System nach einem der vorhergehenden Ansprüche, **dadurch gekennzeichnet, dass** die Unterscheidungseinrichtungen (10) derart ausgeführt sind, dass immer nur dasjenige Tier unterschieden werden kann, bei dem festgestellt worden ist, dass kein Identifikations-Code bestimmt werden kann.

## Revendications

1. Système (1) pour le contrôle individuel d'animaux, qui peuvent être pourvus chacun d'une étiquette d'identification, le système étant pourvu d'au moins un dispositif de lecture (2) pour la production d'une zone électromagnétique d'interrogation et l'enregistrement d'un signal de réponse comprenant un code d'identification et une étiquette d'identification présente dans le champ, le système étant en outre pourvu de moyens de détection (3) pour détecter la présence d'un animal, **caractérisé en ce que** les moyens de détection (3) sont agencés de manière à détecter la présence d'un animal dans le champ d'interrogation, et le système est en outre pourvu de moyens (10) de discrimination, conçus pour discriminer un animal dont il a été détecté, à l'aide des moyens de détection, qu'il est présent dans le champ d'interrogation et à partir duquel aucun signal de réponse n'est reçu par le dispositif de lecture (2), signal sur la base duquel le code d'identification peut être dérivé.

2. Système selon la revendication 1, **caractérisé en ce que** les moyens de distinction comprennent des moyens de pulvérisation (11), à l'aide desquels, afin de discriminer un animal, ce dernier peut être pourvu d'une pulvérisation colorée.

3. Système selon la revendication 1 et/ou 2, **caractérisé en ce que** les moyens de discrimination comprennent une clôture commandable (36), avec laquelle l'animal peut être guidé vers un espace de discrimination, pour discriminer l'animal.

4. Système selon l'une quelconque des revendications précédentes, **caractérisé en ce que** les moyens de détection (3) comprennent un appareil de prise de vues pour détecter la présence d'un animal.

5. Système selon l'une quelconque des revendications précédentes, **caractérisé en ce que** des moyens de détection comprennent des capteurs de lumière (28,30) pour détecter la présence d'un animal.

6. Système selon l'une quelconque des revendications précédentes, **caractérisé en ce que** les moyens de détection (3) sont conçus pour détecter la présence d'un animal à l'aide d'ultrasons.

7. Système selon l'une quelconque des revendications précédentes, **caractérisé en ce que** les moyens de détection (3) comprennent un dispositif de pesée pour peser un animal.

8. Système selon l'une quelconque des revendications précédentes, **caractérisé en ce que** les moyens de détection sont pourvus d'une clôture (46), qui peut être agencée de manière à se fermer automatiquement, et peut être ouverte par un animal.

9. Système selon la revendication 8, **caractérisé en ce que** les moyens (3) sont pourvus d'un mécanisme et/ou d'un capteur électronique, avec lequel l'ouverture de la clôture (46) est détectable.

10. Système selon l'une quelconque des revendications précédentes, **caractérisé en ce que** les moyens de détection comprennent en outre une auge d'alimentation (4, 18) pouvant être actionnée par un animal et qui est conçue pour détecter la présence d'un animal.

11. Système selon l'une quelconque des revendications précédentes, **caractérisé en ce que** le dispositif de lecture comprend une antenne de cheminement (34) pour générer le champ d'interrogation.

12. Système selon l'une quelconque des revendications 1 à 11, **caractérisé en ce que** le dispositif de lecture comprend un dispositif d'émission et de réception (52, 58) agencé sous la forme d'une porte pour générer le champ d'interrogation.

13. Système selon l'une quelconque des revendications précédentes, **caractérisé en ce que** le système comprend un sas (24), dans lequel chaque fois un animal peut être reçu alors que les moyens de détection sont conçus pour détecter la présence de l'animal dans le sas, et dans lequel le dispositif de lecture est conçu pour détecter uniquement une étiquette de l'animal présent dans le sas.

14. Système selon l'une quelconque des revendications précédentes, **caractérisé en ce que** les dimensions du champ d'interrogation sont telles que seul le code d'identification d'une étiquette d'un animal, qui est détecté par les moyens de détection, peut être détecté par le dispositif de lecture (2).

15. Système selon l'une quelconque des revendications précédentes, **caractérisé en ce que** les moyens de discrimination (10) sont conçus de telle sorte que chaque fois seul peut être discriminé l'animal dont il a été établi qu'aucun code d'identification ne peut être déterminé.
